# EUROPÄISCHE PATENTSCHRIFT

(11) **EP 0 462 052 B1**
(45) Veröffentlichungstag und Bekanntmachung des Hinweises auf die Patenterteilung: **23.06.1993**
(21) Anmeldenummer: 91810386.2
(22) Anmeldetag: 22.05.1991
(51) Int. Cl.: F16L 3/10, F16L 3/123

(54) **Rohrschelle**
Pipe clamp
Collier de serrage pour tuyau

(30) Priorität: 12.06.1990 DE 4018738
(43) Veröffentlichungstag der Anmeldung: 18.12.1991
(73) Patentinhaber: HILTI Aktiengesellschaft, 9494 Schaan (LI)
(72) Erfinder: Höfle, Siegfried, A-6840 Götzis (AT)
(74) Vertreter: Wildi, Roland

(56) Entgegenhaltungen:
- DE-A- 3 346 423

## Beschreibung

Die Erfindung betrifft eine Rohrschelle bestehend aus einem Schellenkörper mit auswärts gerichteten Enden, die von wenigstens einer Schliessschraube zusammenspannbare Flansche aufweisen, von denen der eine Flansch über ein Gewinde mit der Schliessschraube verbunden ist und der andere Flansch eine Durchtrittsöffnung für den Kopf der Schliessschraube aufweist und diese Oeffnung von einer Abdeckplatte auf der dem gegenüberliegenden Flansch abgewandten Seite teilweise abdeckbar ist.

Bei einer aus der EP-A-0 319 521 A2 bekannten Rohrschelle weist der Schellenkörper zwei auswärts gebogene, von einer Schliessschraube zusammenspannbare Flansche auf. Zur Verkürzung der Montagezeit und zur Vermeidung der sonst langen, notwendigen und störenden Schliessschrauben, ist der Kopf der über ein Gewinde mit dem einen Flansch verbundenen Schliessschraube mit Bezug auf deren Mittellängsachse axial durch eine Durchtrittsöffnung im anderen Flansch hindurchführbar. Vor dem Festziehen der Schliessschraube wird zwischen Schliessschraubenkopf und Flansch eine mit einem am einen Ende offenen Langloch ausgebildete Unterlegscheibe geschoben.

Bei dieser bekannten Rohrschelle ist die Montage mit einer Hand unmöglich. Drückt man eine Rohrleitung mit einer Hand in die gewünschte Montageposition, so muss man mit der anderen Hand gleichzeitig den Schellenkörper um das Rohr halten und die Unterlegscheibe zwischen Schliessschraubenkopf und Flansch schieben.

Die Handhabung kann zusätzlich erschwert werden, wenn die Unterlegscheibe bei ungewollter Berührung aus der vorpositionierten Lage abspringt und somit neu aufgesteckt werden muss.

Der Erfindung liegt die Aufgabe zugrunde, eine Rohrschelle zu schaffen, die nebst kurzer Montagezeit eine einfache und sichere Handhabung gewährleistet.

Erfindungsgemäss wird diese Aufgabe dadurch gelöst, dass eine Abdeckplatte an dem Flansch schwenkbar gelagert ist.

Durch die schwenkbare Lagerung der Abdeckplatte wird erreicht, dass diese selbsttätig ihre jeweilige Funktionsstellung einnimmt. Ohne zusätzliche Manipulation wird beim Hindurchführen des Schliessschraubenkopfes durch die Oeffnung im Flansch die Abdeckplatte weg- und anschliessend wieder zugeschwenkt.

Zur Sicherstellung eines Zuschwenkens der Abdeckplatte zum Flansch hin nach dem Hindurchführen des Schliessschraubenkopfes ist gemäss einer vorteilhaften Ausgestaltung der Erfindung die Abdeckplatte zum Flansch hin rückfedernd gelagert. Die zur Rückfederung in die den Wiederaustritt des Schliessschraubenkopfes verhindernde Stellung benötigte Kraft kann durch die eigene Federkraft der Abdeckplatte erzeugt werden. In diesem Falle kann die Abdeckplatte selbst als Feder ausgebildet sein.

Vorteilhafterweise hat die Rohrschelle am Flansch eine Ausnehmung für den Eingriff einer Zunge der Abdeckplatte. Durch diese besondere Ausgestaltung des Flansches kann die Zunge der Abdeckplatte in die Ausnehmung am Flansch gesteckt und, falls die Abdeckplatte selbst als Feder ausgebildet ist, durch einen anschliessenden Pressvorgang mit dem Flansch verbunden werden.

Eine weitere Möglichkeit zur Festlegung einer als Feder ausgebildeten Abdeckplatte kann beispielsweise mittels Punktschweissung am Flansch erfolgen.

Für kleinere Durchmesser kann der Schellenkörper einstückig, also als durchgehendes Bauteil, ausgebildet sein. Für grössere Rohrdurchmesser ist eine zweiteilige Rohrschelle mit zwei Schraubverbindungen vorteilhaft, wobei die Schellenkörper aus zwei halbkreisförmigen Segmenten bestehen, von denen beispielsweise jedes auf seiner Innenseite mittels einer ebenfalls halbkreisförmigen gummielastischen Einlage abgedeckt sein kann.

Auch bei der zweiteiligen Rohrschelle sind sämtliche Flansche nach auswärts gerichtet. Dabei stellt ein Flanschenpaar eine normale Schraubverbindung dar. Der eine Flansch besitzt eine Durchgangsbohrung und der andere Flansch trägt ein Gewinde, das zur Aufnahme einer Verbindungsschraube dient. Das zweite Flanschenpaar stellt die erfindungsgemässe Verbindungsart dar.

Je nach Verwendungsfall ist es möglich, eine zweiteilige Rohrschelle zu verwenden, die an beiden Flanschenpaaren die erfindungsgemässe Verbindung aufweist.

Die Erfindung wird nachstehend in den Zeichnungen anhand eines Ausführungsbeispieles näher erläutert. Es zeigen:
- Fig. 1: eine Rohrschelle in Seitenansicht;
- Fig. 2: einen Schnitt durch die Rohrschelle gemäss Fig. 1 entlang der Linie II-II;
- Fig. 3: eine Draufsicht auf die Rohrschelle gemäss Fig. 1.

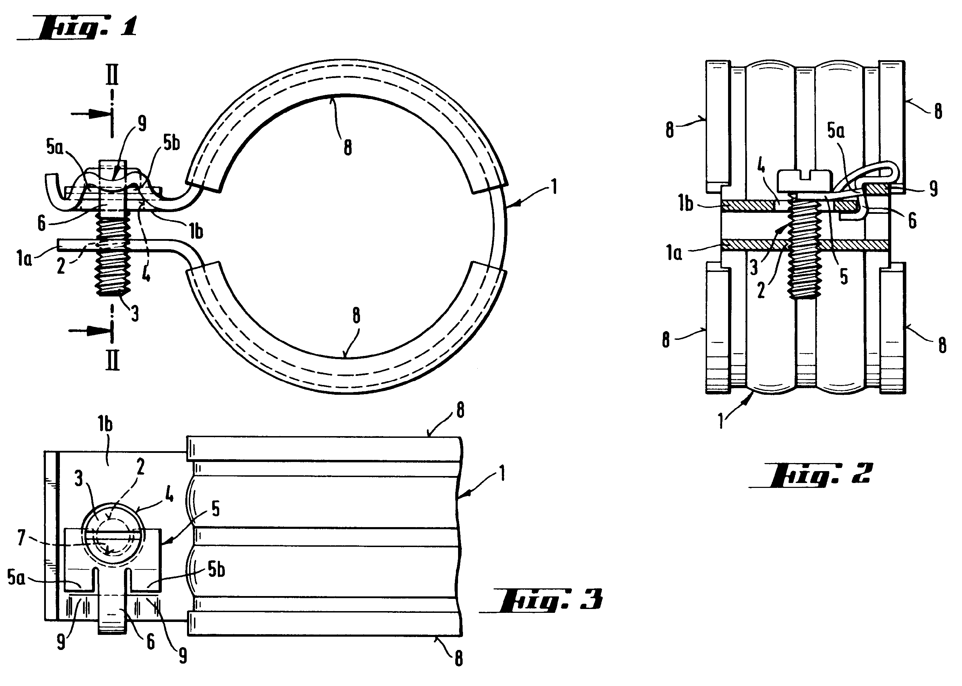

Die Fig. 1 bis 3 lassen eine in der Schliessstellung kreisringförmige Rohrschelle erkennen, die einen aus Metallband bestehenden Schellenkörper 1 aufweist, der bei dem dargestellten Ausführungsbeispiel aus einem Teil besteht. Seine Innenseite ist mittels einer gummielastischen Einlage 8 abgedeckt, welche seine Seitenränder umgreifende, flanschartige Bereiche mit endseitigen Stirnflächen aufweist.

Bei der in Fig. 1 dargestellten Rohrschelle ist sowohl ein eine Schliessschraube 3 tragender Flansch 1a mit Gewinde 2, als auch ein eine Durchtrittsöffnung 4 tragender Flansch 1b starr mit dem Schellenkörper 1 verbunden. Die sich in dem Flansch 1b befindliche Durchtrittsöffnung 4 hat eine solche lichte Weite, dass der Kopf der Schliessschraube 3 ohne weiteres hindurchgefürt werden kann.

Ohne weitere Massnahmen könnte sich natürlich die Schliessschraube 3 wieder aus der Durchtrittsöffnung 4 zurückziehen. Um dies zu verhindern, ist eine besonders gestaltete Abdeckplatte 5 über eine Zunge 6 an dem Flansch 1b schwenkbar gelagert angeordnet. Zur besseren Abdeckung kann ein Ende der Abdeckplatte 5 eine konkave Ausnehmung 7 aufweisen, deren Radius etwas grösser ist, als der Radius des Gewindeaussendurchmessers der Schliessschraube 3.

Wird nun bei der Montage die Schliessschraube 3 durch die Durchtrittsöffnung 4 des einen Flansches 1b durchgesteckt, so berührt die Schliessschraube 3 gleich anschliessend die Abdeckplatte 5 an der Unterseite und drückt diese nach aussen, so dass an der Abdeckplatte 5 eine Schwenkbewegung entsteht. Nachdem der Kopf der Schliessschraube 3 den konkaven Bereich der Abdeckplatte 5 passiert hat, nimmt die Abdeckplatte 5 aufgrund ihrer Federkraft ihre ursprüngliche Lage wieder ein, und umgreift mit ihrer konkaven Ausnehmung 7 den Umfang der Schliessschraube 3 im Gewindebereich ungefähr zur Hälfte. Anschliessend werden die Flansche 1a, 1b mit der Schliessschraube 3 zusammengezogen. Dabei kommt die Abdeckplatte 5 auf den Flansch 1b zu liegen und bildet somit das Widerlager für den Kopf der Schliessschraube 3.

Eine zusätzliche Besonderheit stellen die an der Abdeckplatte 5 gegenüberliegend zur konkaven Ausnehmung 7 angeordneten Abstützelemente 5a, 5b dar, die sich an einem aufgebogenen Teil 9 des Flansches 1b abstützen und somit eine Verschiebung der Abdeckplatte 5 in radialer Richtung, bezogen auf die Mittellängsachse, der Schliessschraube 3 zumindest im festgezogenen Zustand verhindern.

## Patentansprüche

1. Rohrschelle bestehend aus einem Schellenkörper (1) mit auswärts gerichteten Enden, die von wenigstens einer Schliessschraube (3) zusammenspannbare Flansche (1a, 1b) aufweisen, von denen der eine Flansch (1a) über ein Gewinde (2) mit der Schliessschraube (3) verbunden ist und der andere Flansch (1b) eine Durchtrittsöffnung (4) für den Kopf der Schliessschraube (3) aufweist und diese Durchtrittsöffnung (4) von einer Abdeckplatte (5) auf der dem gegenüberliegenden Flansch (1a) abgewandten Seite teilweise abdeckbar ist, **dadurch gekennzeichnet**, dass die Abdeckplatte (5) an dem Flansch (1b) schwenkbar gelagert ist.

2. Rohrschelle nach Anspruch 1, dadurch gekennzeichnet, dass die Abdeckplatte (5) zum Flansch (1b) hin rückfedernd gelagert ist.

3. Rohrschelle nach Anspruch 1 oder 2, dadurch gekennzeichnet, dass am Flansch (1b) eine Ausnehmung für den Eingriff einer Zunge (6) der Abdeckplatte (5) vorgesehen ist.

## Claims

1. Pipe clamp comprising a clamp body (1) with outwardly oriented ends having flanges (1a, 1b), which are clamped by at least one tightening screw (3) and of which one flange (1a) is connected to the tightening screw (3) via a thread (2) and the other flange (1b) comprises a passage (4) for the head of the tightening screw (3), and this passage (4) is partially covered on the side facing away from the opposite flange (1a) by a cover plate (5), **characterised in that** the cover plate (5) is pivotably mounted on the flange (1b).

2. Pipe clamp according to claim 1, **characterised in that** the cover plate (5) is mounted to be spring back towards the flange (1b).

3. Pipe clamp according to claim 1 or 2, **characterised in that** a cut-out is provided on the flange (1b) for engaging a tongue (6) of the cover plate (5).

## Revendications

1. Collier de serrage pour tuyaux, comprenant un corps de collier (1) avec des extrémités dirigées vers l'extérieur et munies de brides (1a, 1b) pouvant être serrées ensemble par au moins une vis de fermeture (3), l'une des brides (1a) étant raccordée à la vis de fermeture (3) par l'intermédiaire d'un filetage (2) et l'autre bride (1b) présentant une ouverture de passage (4) pour la tête de la vis de fermeture (3) et ladite ouverture de passage (4) pouvant être recouverte partiellement par une plaque de recouvrement (5) du côte opposé à la bride (1a) opposée, **caractérisé en ce** que la plaque de recouvrement (5) est montée de manière pivotante sur la bride (1b).

2. Collier de serrage pour tuyaux selon la revendication 1, caractérisé en ce que la plaque de recouvrement (5) est montée de façon à permettre le retour élastique vers la bride (1b).

3. Collier de serrage selon l'une des revendications 1 ou 2, caractérisé en ce que sur la bride (1b) est prévu un évidement pour l'engagement d'une languette (6) de la plaque de recouvrement (5).
